# EUROPEAN PATENT APPLICATION

(11) **EP 4 375 721 A1**
(43) Date of publication of application: **29.05.2024**
(21) Application number: 23181411.2
(22) Date of filing: 26.06.2023
(51) Int. Cl.: G02B 6/44

(54) **OPTICAL FIBER CABLE WITH ACCESSIBLE STRENGTH MEMBER**

(30) Priority: 24.11.2022 IN 202211067739
(71) Applicant: Sterlite Technologies Limited, 122102 Haryana (IN)
(72) Inventor: Pardeshi, Prasanna Kumar, 122102 Gurugram, Haryana (IN); Benjamin, Seldon, 122102 Gurugram, Haryana (IN)
(74) Representative: Petraz, Gilberto Luigi

(57) **Abstract**

The present disclosure relates to an optical fiber cable (100) comprising a core (104) with one or more optical fibers units (102), one or more layers (106) substantially surrounding the core (104), a sheath (108) surrounding the one or more layers (106), one or more strength members (110) at least partially embedded in the sheath (108) and a plurality of ripcords (112) positioned on both sides of a strength member of the one or more strength members (110). In particular, the core (104).

## Description

### TECHNICAL FIELD

Embodiments of the present disclosure relate to the field of optical fiber, and more particularly to an optical fiber cable with accessible strength member.

This application claims the benefit of Indian Application No. 202211067739 titled "OPTICAL FIBER CABLE WITH ACCESSIBLE STRENGTH MEMBER" filed by the applicant on November 24, 2022, which is incorporated herein by reference in its entirety.

### BACKGROUND ART

Communications networks are used to convey a variety of signals such as voice, video, data and the like to subscribers. Optical fiber cables are a critical component of modern communication networks across the globe. Service providers are now routing optical fiber deeper into communication networks to increase the bandwidth available to subscribers. Optical fibers are strands of glass fiber processed so that light beams transmitted through the glass fiber are subject to total internal reflection wherein a large fraction of the incident intensity of light directed into the fiber is received at the other end of the fiber.

In recent years, communication via optical fiber cable has enjoyed a rapid rate of growth. Optical fibers provide the ability to transmit large quantities of information by light impulses and thus promise to increase in use in the future. Optical fiber cables are constructed in many configurations, all of which typically include three functional elements, a cable sheath that surrounds the optical fibers, a strength member to withstand cable tension during either placement or when permanently installed, and multiple very fine gauge optical fibers.

An optical fiber cable has a number of optical fibers surrounded by one or more reinforcement plastic layers, such that each optical fiber has a potential to carry information in the form of modulated light. However, the optical fibers are very delicate and thus opening or peeling the optical fiber cable is very tricky without affecting any optical fiber inside the cable. To provide the necessary strength to the optical fiber cable, the optical fiber cable is provided with one or more strength members. Strength members provide the majority of the structural strength to the cable and play critical role in increasing tensile strength, which is critical during the installation process of the cable.

Strength members are one of the important components of optical fiber cables. The purpose of the strength members is to provide the optical fiber cables required tensile strength, stiffness, rigidity and bend resistance. A strength member can be installed either at a core of an optical fiber cable or embedded inside a sheath/jacket of the optical fiber cable. Strength layers and/or strength members add mechanical strength to fiber optic cables to protect the internal optical fibers against stresses applied to the cables during installation and thereafter. Example strength layers/strength members include aramid yam, steel, glass-reinforced plastic (GRP), and epoxy reinforced glass roving.

The strength members are embedded in the sheath of the cable to provide necessary strength and such strength members are required to be accessed during the installation of the cable. Conventionally, ripcords are used to tear off the sheath material. Optical fiber cables are provided with a single rip cord positioned near the strength members, such that the ripcord can tear the sheath material from one side of the embedded strength member, which is not sufficient to completely access the strength member.

Prior art reference US7197215B2 discloses a tubeless optical fiber having a number of optical fibers, two strength members and one rip cord embedded between the two strength members of the optical fiber cable.

Another prior art reference EP1591814B1 discloses an optical fiber cable having a number of optical fiber bundles, one or more strength members, and one rip cord embedded near the one or more strength members.

Yet another prior art reference US10921541B2 discloses an optical fiber having optical fibers surrounded by a sheath, a strength member embedded in the sheath, and a rip cord, such that the rip cord is placed below a sheath with the strength member.

The prior art references mentioned above have optical fibers that are generally facilitated by a single rip cord that makes it difficult and tricky to open up the optical fiber cable. It requires a certain degree of additional efforts on the field to access the embedded strength members. Further, the placement of the rip cord in relation to the strength member's location causes additional time and effort to open up the cable. Also, while opening up the optical fiber cable with a single ripcord, there is a possibility of breaking the strength members.

Therefore, in the light of the above-stated discussion, there is a need to provide a technical solution that overcomes the aforementioned problems of pealing or opening up the optical fiber cables to access the strength members without causing any major damage. Thus, the present disclosure provides an optical fiber cable with accessible strength members.

### SUMMARY OF THE DISCLOSURE

Embodiments of the present disclosure provide an optical fiber cable with accessible strength members.

According to the first aspect of the present disclosure, an optical fiber cable includes a core with one or more optical fibers units, one or more layers substantially surrounding the core, a sheath substantially surrounding the one or more layers, one or more strength members at least partially embedded in the sheath and a plurality of ripcords. In particular, a pair of ripcords of the plurality of ripcords are positioned on both sides of a strength member of the one or more strength members. Further, the sheath comprises a plurality of cavities adapted to receive the plurality of ripcords.

According to the second aspect of the present disclosure, the one or more optical fibers units is selected from one of, loose fibers, flat ribbon, Intelligently Bonded Ribbon (IBR), fibers in micromodules, fibers in loose tubes, and ribbons in loose tubes.

According to the third aspect of the present disclosure, each layer of the one or more layers is selected from one of, water blocking tape (WBT), water swellable yarns (WSY), strength yarns, dielectric armouring, metal armouring, and tape.

According to the fourth aspect of the present disclosure, each strength member of the one or more strength members is selected from one of, Fiber-reinforced plastic (FRP), Aramid Reinforcement Plastic (ARP), and steel rods. In particular, each strength member of the one or more strength members has a diameter in a range of 0.5 mm to 2mm.

In accordance with an embodiment of the present disclosure, each ripcord of the plurality of ripcords is made of a material selected from one of polyester, aramid, polyethylene terephthalate (PET) polymer. And, each rip cord of the plurality of ripcords has a decitex (dTex) value in a range of 1000 to 3000.

According to the fifth aspect of the present disclosure, when the plurality of ripcords are positioned in the plurality of cavities, a distance between a ripcord of the plurality of ripcords and a centre of a strength member of the one or more strength members is less than or equal to a diameter of the strength member.

According to the sixth aspect of the present disclosure, when the plurality of ripcords are positioned loosely beneath the sheath the distance between the ripcord of the plurality of ripcords and the centre of the strength member of the one or more strength members is greater than or equal to the diameter of the strength member.

According to the seventh aspect of the present disclosure, a distance between a pair of ripcords of the plurality of ripcords positioned on both sides of a strength member of the one or more strength members is in a range of 1 mm to 5mm.

In accordance with an embodiment of the present disclosure, the one or more layers are soft dielectric layers, the plurality of ripcords deforms an outer surface of the one or more layers

These and other aspects herein will be better appreciated and understood when considered in conjunction with the following description and the accompanying drawings. It should be understood, however, that the following descriptions are given by way of illustration and not of limitation. Many changes and modifications is made within the scope of the disclosure herein without departing from the spirit thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1A is a pictorial snapshot illustrating a cross-sectional view of an optical fiber cable with accessible strength member(s) in accordance with an embodiment of the present disclosure;
Fig. 1B is a pictorial snapshot illustrating a cross-sectional view of the optical fiber cable with accessible strength member(s) in accordance with another embodiment of the present disclosure;
Fig. 1 C is a block diagram illustrating components of an optical fiber cable with accessible strength member(s) in accordance with an embodiment of the present disclosure;
Fig. 2 is a pictorial snapshot illustrating a cross-sectional view of an optical fiber cable with accessible strength member(s) in accordance with yet another embodiment of the present disclosure;
Fig. 3 is a pictorial snapshot illustrating a cross-sectional view of an optical fiber cable with accessible strength member(s) in accordance with yet another embodiment of the present disclosure;

The optical fiber cable with accessible strength member illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements is included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

The term "distal layer" as used herein refers to a layer adjacent to the sheath 108 and at a largest radial distance from the center 124 of the optical fiber cable 100.

As used herein, "dTex" is a metric unit, commonly used for continuous filament yarn, defined as the mass (in grams) per 10,000 meters.

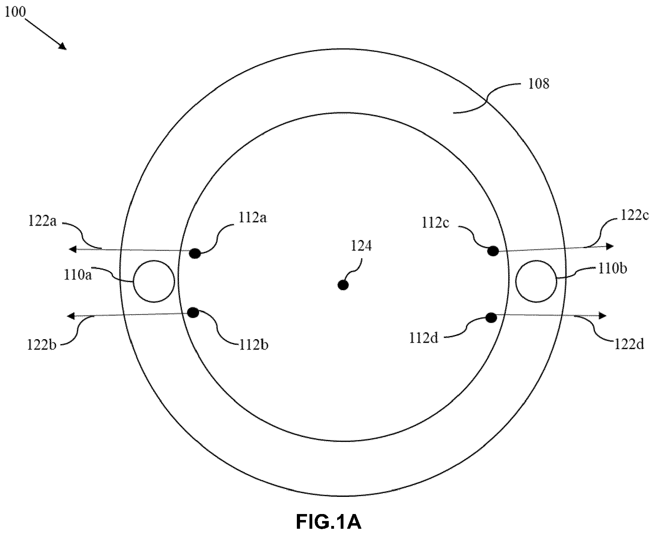

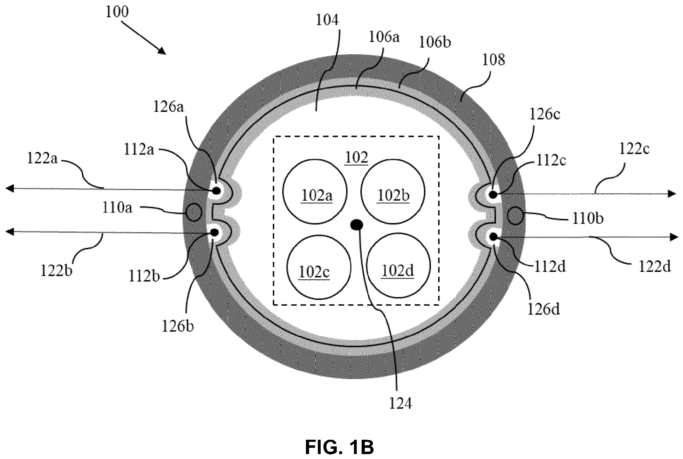

Fig. 1A and Fig. 1B are pictorial snapshots illustrating a cross-sectional view of an optical fiber cable 100 with accessible strength members 110 in accordance with one or more exemplary aspects of the present disclosure. In particular, the optical fiber cable 100 is configured to transmit information in the form of one or more modulated optical signals. The optical fiber cable 100 includes a core 104, one or more layers 106 and the sheath 108.

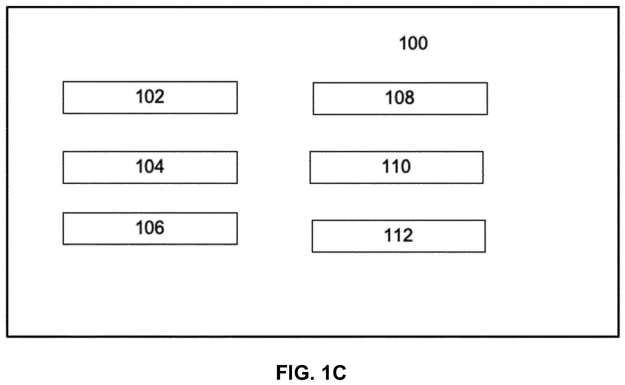

Fig. 1C is a block diagram illustrating components of an optical fiber cable with accessible strength member(s) in accordance with an embodiment of the present disclosure.

Now referring simultaneously to Fig. 1A ,1B and 1C. The core 104 includes one or more optical fiber units 102 of which first through fourth optical fiber units 102a-102d are shown. Each optical fiber unit of the one or more optical fiber units 102 have one or more optical fibers made up of a material such as, but not limited to, glass, plastic, and any type of the material known, related and later developed materials.

In accordance with an embodiment of the present disclosure, one or more optical fibers of the optical fiber units 102 is, but not limited to, loose fibers, flat ribbon, Intelligently Bonded Ribbon (IBR), fibers in micromodules, fibers in loose tubes, ribbon in loose tubes, and the like. In particular, the IBR is configured to roll and take the shape of a bundle to make optical fiber units 102, thus improving the form factor of the cable. Aspects of the present disclosure are intended to include and/or otherwise cover any type of the optical fiber units 102, without deviating from the scope of the present disclosure.

In accordance with one embodiment of the present disclosure, the core 104 has four optical fiber units (i.e., the first through fourth optical fiber units 102a-102d). In alternate embodiments, the plurality of core 104 have any number of optical fiber units.

In accordance with an embodiment of the present disclosure, the one or more optical fibers of the optical fiber units 102 facilitates total internal reflection of optical signals inside the one or more optical fibers.

In accordance with an embodiment of the present disclosure, the core 104 is substantially surrounded by one or more layers 106 of which the first and the second layers 106a and 106b are shown. The one or more layers 106 is substantially surrounded by the sheath 108. In particular, each layer of the one or more layers 106 is made up of materials such as but not limited to water blocking tape (WBT), water swellable yarns (WSY), strength yarns, dielectric armouring, metal armouring, tape, and the like.

Alternatively, each layer of the one or more layers is made up of soft dielectric material. Aspects of the present disclosure are intended to include and/or otherwise cover any type of material for the one or more layers 106, without deviating from the scope of the present disclosure. In other aspects, the one or more layers 106 have any number of layers, without deviating from the scope of the present disclosure. In such a scenario, each layer of the one or more layers 106 performs similar to the functionalities of the first layer 106a and the second layer 106b as described above.

In some aspects of the present disclosure, when the one or more layers 106 are soft dielectric layers, the plurality of ripcords 112 deform an outer surface of the one or more layers 106. The one or more layers 106 of the optical fiber cable 200 provide an enclosure to the core 104 and further facilitate an insulation to the one or more optical fibers of optical fiber units 102.

In accordance with an embodiment of the present disclosure, the sheath 108 having one or more strength members 110. The one or more strength members 110 are completely embedded in the sheath 108. In particular, the sheath 108 is an outermost layer of the optical fiber cable 100 that provides support, strength, and insulation to the optical fiber cable 100. Moreover, the strength members 110 increases the tensile strength of the optical fiber cable 100 that plays a vital role during an installation process of the optical fiber cable 100. The strength members 110 is made up of a material such as, but not limited to, Fiber-reinforced plastic (FRP), Aramid Reinforcement Plastic (ARP), steel rods, and the like known, related, and later developed materials.

In other alternate aspects, the one or more strength members 110 have any number of strength members, without deviating from the scope of the present disclosure.

The optical fiber cable 100 further have a plurality of ripcords 112. In particular, the plurality of ripcords 112 facilitates a user to rip off, tear and/or open up of the optical fiber cable 100 in a set of directions 122 to access the one or more strength members 110 from the sheath 108. First through fourth direction of the set of directions 122 corresponding to first through fourth ripcord 112a-112d of the plurality of ripcords 112. In alternate aspects of the present disclosure, the set of directions 122 is laterally outwards from a center 124 of the optical fiber cable 100. The center 124 refers to an imaginary line at a mid-point of the optical fiber cable 100, extending tangentially throughout a length of the optical fiber cable 100.

Each strength member of the one or more strength members 110 have a pair of ripcords positioned on both sides such that the strength member is accessed by pulling the corresponding pair of ripcords. Particularly, the first strength member 110a have the first and second ripcords 112a and 112b positioned on both sides of the first strength member 110a. Moreover, the second strength member 110b have the third and fourth ripcords 112c and 112d positioned on both sides of the second strength member 110b.

In some aspects of the present disclosure, the plurality of ripcords 112 is positioned in between a distal layer (not shown) of the one or more layers 106 and the sheath 108.

In another aspect of the present disclosure, the plurality of ripcords 112 is positioned between the one or more layers 106.

In accordance with an embodiment of the present disclosure, the pair of ripcords enable the user to easily tear, rip off or open up the sheath 108 of the optical fiber cable 100 for easy accessibility of the one or more strength members 110.

In some aspects of the present disclosure, the plurality of ripcords 112 is disposed between the sheath 108 and one or more layers 106. Alternatively, the plurality of ripcords 112 is disposed inside a plurality of cavities 114 of the sheath 108 near the one or more strength members 110.

In accordance with an embodiment of the present disclosure, the plurality of ripcords 112 is made of a material such as polyester, aramid, polyethylene terephthalate (PET) polymer, and the like known, related, and later developed materials.

In accordance with an embodiment of the present disclosure, the plurality of ripcords 112 is four. In alternative embodiments, the plurality of ripcords 112 have any number of ripcords.

In accordance with an embodiment of the present disclosure, the optical fiber cable 100 further have a plurality of deformations 126. In particular, the plurality of deformations 126 is formed in the one or more layers 106 by virtue of the presence of the plurality of ripcords 112. Moreover, the plurality of ripcords 112 facilitate the user to rip off, tear, and/or open up of the optical fiber cable 100 in the set of directions 122 to access the one or more strength members 110 from the sheath 108.

The first through fourth directions of the set of directions 122 corresponding to first through fourth ripcords 112a-112d of the plurality of ripcords 112, respectively, are shown as 122a-122d.

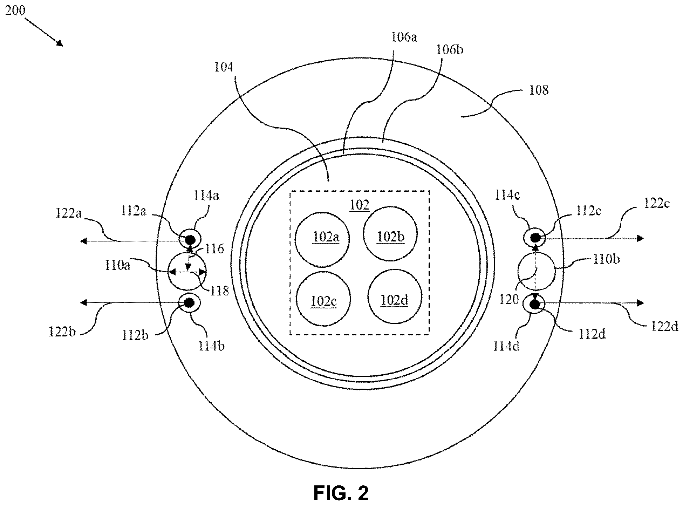

Fig. 2 illustrates a cross-sectional view of an optical fiber cable 200 with accessible strength members 110, in accordance with another exemplary aspect of the present disclosure. The optical fiber cable 200 is substantially similar to the optical fiber cable 100 with like elements referenced with like reference numerals.

The optical fiber cable 200 has a different arrangement of the strength members 110 and the plurality of ripcords 112 when compared with the arrangement of the strength members 110 and the plurality of ripcords 112 in the optical fiber cable 100. The sheath 108 have the one or more strength members 110 and the plurality of ripcords 112 such that each pair of the plurality of ripcords 112 are positioned on both sides of each strength member of the one or more strength members 110 respectively.

In accordance with an embodiment of the present disclosure, the sheath 108 of the optical fiber cable 100 have the plurality of cavities 114 extending in pair along a longitudinal direction of the optical fiber cable 100 and is positioned on both sides of each strength member of the one or more strength members 110. Moreover, the plurality of cavities 114 is adapted to receive, bear and/or contain the plurality of ripcords 112.

In some aspects of the present disclosure, when the first through fourth ripcords 112a-112d is borne by the first through fourth cavities 114a-114d, respectively, a distance 116 between a ripcord of the plurality of ripcords 112 and a center of a strength member of the one or more strength members 110 is less than or equal to a diameter 118 of the strength member.

In another aspect of the present disclosure, when the plurality of ripcords 112 are positioned loosely beneath the sheath 108, the distance 116 between the ripcord of the plurality of ripcords 112 and the center of the strength member of the one or more strength members 110 is greater than or equal to the diameter 118 of the strength member.

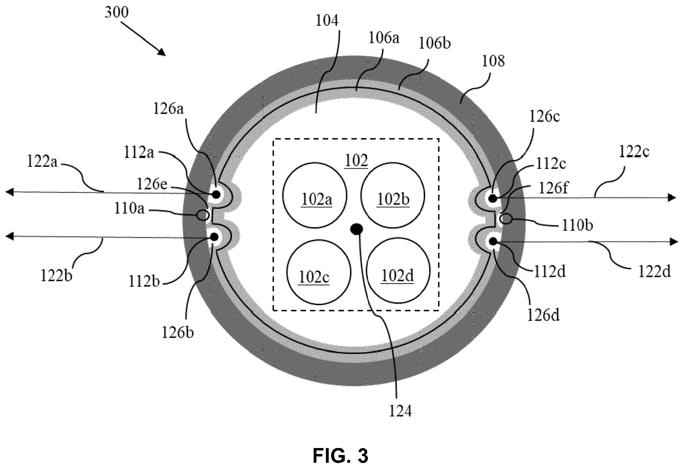

Fig. 3 illustrates a cross-sectional view of the optical fiber cable 300 with accessible strength members 110, in accordance with yet another exemplary aspect of the present disclosure. The optical fiber cable 300 is substantially similar to the optical fiber cable 100 and the optical fiber cable 100 and 200 with like elements referenced with like reference numerals. However, the optical fiber cable 300 has a different arrangement of the strength members 110 and the plurality of ripcords 112 when compared with the arrangement of the strength members 110 and the plurality of ripcords 112 in the optical fiber cable 100 and the optical fiber cable 200.

In accordance with an embodiment of the present disclosure, the one or more strength members 110 is partially embedded in the sheath 108, such that the sheath 108 not bear the one or more strength members 110. The one or more layers 106 is positioned beneath the one or more strength members 110, that that is partially embedded in the sheath 108. The plurality of ripcords 112 is positioned outside the sheath 108, in an inwards direction of the optical fiber cable 100, towards the center 124 of the optical fiber cable 100.

In accordance with an embodiment of the present disclosure, the optical fiber cable 100 further have the plurality of deformations 126 formed in the one or more layers 106 by virtue of the presence of the plurality of ripcords 112. In particular, the first and second deformations 126a and 126b is formed by the first and second ripcords 112a and 112b respectively. The third and fourth deformations 126c and 126d is formed by virtue of the third and fourth ripcords 112c and 112d respectively. In some aspect, the fifth and sixth deformations 126e and 126f of the plurality of deformations 126 is formed in the one or more layers 106 by virtue of the partially embedded first and second strength members 110a and 110b of the one or more strength members 110, respectively.

It will be apparent to a person skilled in the art that the one or more layers 106 is shown to have six deformations. In other aspects, the one or more layers 106 have any number of deformations, without deviating from the scope of the present disclosure.

Further, the plurality of deformations 126 is formed in the one or more layers 106 by virtue of the presence of the plurality of ripcords 112.

In accordance with an embodiment of the present disclosure, the sheath 108 have a thickness in a range of 0.5 millimeters (mm) to 3mm, such that the weight and strength of the sheath 108 is balanced. If the thickness of the sheath 108 is less than 0.5 mm, the sheath does not provide sufficient strength to the optical fiber cable 100. Thickness of the sheath 108 over 3mm results in excessive weight of the optical fiber cable 100, making the optical fiber cable bulky and difficult to handle. Each strength member of the one or more strength members 110 have a diameter in a range of 0.5 mm to 2mm, such that the required mechanical strength and sheath thickness is achieved.

In accordance with an embodiment of the present disclosure, each rip cord of the plurality of ripcords 112 have decitex (dTex) value in a range of 1000 to 3000, such that each ripcord of the plurality of ripcords possess sufficient strength to tear the sheath without consuming much space, thus providing ease of usage. A distance 120 between a pair of ripcords of the plurality of ripcords 112 positioned on both sides of a strength member of the one or more strength members 110 is in a range of 1 mm to 5mm.

The ripcords of the plurality of ripcords 112 is identical to each other. Further, the strength members of the one or more strength members 110 is identical to each other. Thus, the ripcord pairs that are positioned on both sides of a strength member of the one or more strength members 110 allow the user to tear off the sheath 108 from both sides of the one or more strength members 110 to access the one or more strength members 110 easily.

Advantageously, the present disclosure provides an optical fiber having a plurality of ripcords facilitating an efficient rip off, tear and/or open up of the optical fiber cable with easy accessibility of strength members disposed therein. Further, the optical fiber cable 100 is easy to operate and implement, and not require any specific skills, thus provides ease of usage.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance suggest or render expedient, but such are intended to cover the application or implementation without departing from the spirit or scope of the claims of the present technology.

In a case that no conflict occurs, the embodiments in the present disclosure and the features in the embodiments is mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (100,200,300) **characterized in that**:
a core (104) comprising one or more optical fibers units (102);
one or more layers (106) substantially surrounding the core (104);
a sheath (108) substantially surrounding the one or more layers (106);
one or more strength members (110) at least partially embedded in the sheath (108); and
a plurality of ripcords (112) **characterized in that** wherein a pair of ripcords of the plurality of ripcords (112) are positioned on both sides of a strength member of the one or more strength members (110).

2. The optical fiber cable (100, 200, 300) as claimed in claim 1, wherein the one or more optical fibers units (102) is selected from one of, loose fibers, flat ribbon, Intelligently Bonded Ribbon (IBR), fibers in micromodules, fibers in loose tubes, and ribbons in loose tubes.

3. The optical fiber cable (100,200,300) as claimed in claim 1, wherein each layer of the one or more layers (106) is selected from one of, water blocking tape (WBT), water swellable yarns (WSY), strength yarns, dielectric armouring, metal armouring, and tape.

4. The optical fiber cable (100,200,300) as claimed in claim 1, wherein the sheath (108) has a thickness in a range of 0.5 millimeters (mm) to 3mm.

5. The optical fiber cable (100,200,300) as claimed in claim 1, wherein each strength member of the one or more strength members (110) has a diameter in a range of 0.5 mm to 2mm.

6. The optical fiber cable (100,200,300) as claimed in claim 1, wherein each rip cord of the plurality of ripcords (112) has decitex (dTex) value in a range of 1000 to 3000.

7. The optical fiber cable (100,200,300) as claimed in claim 1, wherein the sheath (108) further comprising a plurality of cavities (114) adapted to receive the plurality of ripcords (112).

8. The optical fiber cable (100,200,300) as claimed in claim 8, wherein the plurality of ripcords (112) are positioned in the plurality of cavities (112).

9. The optical fiber cable (100,200,300) as claimed in claim 1, wherein the plurality of ripcords (112) are positioned loosely beneath the sheath (108).

10. The optical fiber cable (100,200,300) as claimed in claim 1, wherein a distance (120) between a pair of ripcords of the plurality of ripcords (112) is in a range of 1 mm to 5mm.

11. The optical fiber cable (100,200,300) as claimed in claim 1 further comprising a one or more layers (106), wherein the plurality of ripcords (112) deforms an outer surface of the one or more layers (106).

12. The optical fiber cable (100,200,300) as claimed in claim 1, wherein the optical fiber cable (100,200,300) comprises a plurality of deformations (126) formed in the one or more layers (106) by the plurality of ripcords (112).

13. The optical fiber cable (100,200,300) as claimed in claim 1, wherein the plurality of ripcords (112) are positioned in between a distal layer of the one or more layers (106) and the sheath (108).
